# EUROPEAN PATENT APPLICATION

(11) **EP 3 672 239 A1**
(43) Date of publication of application: **24.06.2020**
(21) Application number: 18854048.8
(22) Date of filing: 06.09.2018
(51) Int. Cl.: H04N 13/00, G06F 3/0488, H04N 13/183, H04N 13/194, H04N 13/359, H04N 13/344

(54) **INTERFACE DISPLAYING METHOD AND DEVICE**

(30) Priority: 07.09.2017 CN 201710802021
(71) Applicant: Huawei Technologies Co., Ltd., Longgang District Shenzhen, Guangdong 518129 (CN)
(72) Inventor: YANG, Chenpeng, Shenzhen Guangdong 518129 (CN)
(74) Representative: Maiwald Patent- und Rechtsanwaltsgesellschaft mbH
(86) International application number: PCT/CN2018/104257
(87) International publication number: WO 2019/047876

(57) **Abstract**

Embodiments of this application disclose an interface display method and an apparatus. The method in the embodiments of this application is used by a first electronic device to display a three-dimensional 3D interface on a second electronic device. The first electronic device detects that the second electronic device is connected to the first electronic device; obtains at least one to-be-displayed window based on a preset quantity of windows, where the at least one to-be-displayed window is a two-dimensional window; divides a display interface of the second electronic device based on the preset quantity of windows and the at least one obtained to-be-displayed window; performs dimension conversion processing on the at least one to-be-displayed window; and sends at least one converted to-be-displayed window to the second electronic device, where the at least one converted to-be-displayed window is a three-dimensional window.

## Description

This application claims priority to Chinese Patent Application No. 201710802021.9, filed with the Chinese Patent Office on September 7, 2017 and entitled "INTERFACE DISPLAY METHOD AND APPARATUS", which is incorporated herein by reference in its entirety.

### TECHNICAL FIELD

This application relates to the computer application field, and in particular, to an application interface display method and an apparatus.

### BACKGROUND

An electronic device worn on a body is usually referred to as a wearable device. For example, a head-mounted wearable device (such as glasses), a wrist-mounted wearable device (such as a watch or a wrist strap), a contact lens-type wearable device, a ring-type wearable device, a shoe-type wearable device, or a clothing-type wearable device is provided, so that the wearable device can be attached to or separate from a body or clothes. The wearable device is the electronic device (such as the clothes or the glasses) allowed to be worn on the body, to improve portability and accessibility of the electronic device.

A head-mounted wearable device (such as an HDM (head-mounted display)) is widely developed in wearable devices, for example, a see-through (see-through)-type screen used to provide augmented reality (AR), or a see-closed (see-closed)-type screen used to provide virtual reality (VR).

Based on a translucent lens feature, a see-through-type HMD may synthesize and combine real world-based pictures and virtual objects to provide a picture with additional information, where the additional information is difficult to be obtained in the real world. A see-closed-type HMD may provide two displays, so that content (a game, a movie, streaming or broadcasting data) received from the outside can be displayed on a separate display, to allow a user to focus on the content.

As a user requires quality of life, development of a virtual reality display technology becomes focus of the society.

### SUMMARY

Embodiments of this application provide an interface display method and an electronic device. When a user is connected to a mobile phone by using a 3D display electronic device, multi-window display may be performed on the 3D display electronic device.

According to a first aspect, an interface display method is provided, is used by a first electronic device to display a three-dimensional 3D interface on a second electronic device, and includes: detecting, by the first electronic device, that the second electronic device is connected to the first electronic device; obtaining, by the first electronic device, at least one to-be-displayed window based on a preset quantity of windows, where the at least one to-be-displayed window is a two-dimensional window; dividing, by the first electronic device, a display interface of the second electronic device based on the preset quantity of windows and the at least one obtained to-be-displayed window; performing, by the first electronic device, dimension conversion processing on the at least one to-be-displayed window; and sending, by the first electronic device, at least one converted to-be-displayed window to the second electronic device, where the at least one converted to-be-displayed window is a three-dimensional window.

After being connected to the second electronic device, the first electronic device provides a multi-window 3D window for the second electronic device for displaying, and provides a multi-window user interface. When the second electronic device is a wide-screen 3D display device, a wide screen of the second electronic device is fully utilized.

According to the first aspect, in a first possible implementation of the first aspect, the performing dimension conversion processing on the at least one to-be-displayed window includes: performing binocular rendering on the at least one to-be-displayed window, to obtain a left-eye image and a right-eye image in the at least one to-be-displayed window.

According to the first aspect or the first possible implementation of the first aspect, in a second possible implementation of the first aspect, after the detecting, by the first electronic device, that the second electronic device is connected to the first electronic device, before the obtaining, by the first electronic device, at least one to-be-displayed window based on a preset quantity of windows, the method further includes: detecting, by the first electronic device, that a switch in a 3D mode is turned on; and receiving, by the first electronic device, a notification from the second electronic device, where the notification is used to indicate that the second electronic device is worn by a user.

According to the first aspect or the first possible implementation of the first aspect, in a third possible implementation of the first aspect, after the performing, by the first electronic device, dimension conversion processing on the at least one to-be-displayed window, before the sending, by the first electronic device, at least one converted to-be-displayed window to the second electronic device, the method further includes: detecting, by the first electronic device, that a switch in a 3D mode is turned on; and receiving, by the first electronic device, a notification from the second electronic device, where the notification is used to indicate that the second electronic device is worn by a user.

According to the first aspect to the third possible implementation, in a fourth possible implementation of the first aspect, the at least one to-be-displayed window includes an application program interface and/or a desktop screen.

According to the fourth possible implementation of the first aspect, in a fifth possible implementation of the first aspect, the application program interface includes an interface of a current foreground application and an interface of a background application that are obtained when the first electronic device detects that the second electronic device is connected. According to the fifth possible implementation of the first aspect, in a sixth possible implementation of the first aspect, the method further includes: setting the interface of the current foreground application to a focus window, and setting the interface of the background application to a visible window.

According to the sixth possible implementation of the first aspect, in a seventh possible implementation of the first aspect, the desktop screen includes icons of at least two applications, and the icons are highlighted based on use frequencies of the applications.

According to the first aspect to the seventh possible implementation, in an eighth possible implementation of the first aspect, the second electronic device includes a camera; the first electronic device receives content collected by the camera; and the first electronic device sends the content collected by the camera in real time to the second electronic device, so that the second electronic device displays the content collected by the camera in real time.

The second electronic device displays the real-time content collected by the camera of the second electronic device, to help a user view an ambient environment.

Optionally, the method further includes: when detecting that the second electronic device is disconnected from the first electronic device or the second electronic device is disabled, keeping, by the first electronic device, the focus window in a visible state, setting another visible window to an invisible state, performing 3D-to-2D switching on a window marked as the visible state, and displaying a converted window by using a screen of the first electronic device. According to a second aspect, a first electronic device is provided, is configured to display a three-dimensional (3D) interface on a second electronic device, and includes: a first detection module, configured to detect that the second electronic device is connected to the electronic device; a window obtaining module, configured to obtain at least one to-be-displayed window based on a preset quantity of windows, where the at least one to-be-displayed window is a two-dimensional window; an interface layout module, configured to divide a display interface of the second electronic device based on the preset quantity of windows and the at least one obtained to-be-displayed window; and a 3D conversion module, configured to perform dimension conversion processing on the at least one to-be-displayed window; and
a sending module, configured to send at least one converted to-be-displayed window to the second electronic device, where the at least one converted to-be-displayed window is a three-dimensional window.

In a first possible implementation of the second aspect, the 3D conversion module is configured to perform binocular rendering on the at least one to-be-displayed window, to obtain a left-eye image and a right-eye image in the at least one to-be-displayed window.

According to the second aspect or the first possible implementation of the second aspect, in a second possible implementation of the second aspect, the first electronic device further includes: a second detection module, configured to detect that a switch in a 3D mode is turned on, to trigger the window obtaining module; or a third detection module, configured to receive a notification from the second electronic device, to trigger the window obtaining module, where the notification is used to indicate that the second electronic device is worn by a user. According to the second aspect or the first possible implementation of the second aspect, in a third possible implementation of the second aspect, the first electronic device further includes: a fourth detection module, configured to detect that a switch in a 3D mode is turned on, to trigger the sending module; or a fifth detection module, configured to receive a notification from the second electronic device, to trigger the sending module, where the notification is used to indicate that the second electronic device is worn by a user.

According to the second aspect to the third possible implementation, in a fourth possible implementation of the second aspect, the at least one to-be-displayed window includes an application program interface and/or a desktop screen.

According to the fourth possible implementation of the second aspect, in a fifth possible implementation of the second aspect, the application program interface includes an interface of a current foreground application and an interface of a background application of the first electronic device that are obtained when the first electronic device detects that the second electronic device is connected.

According to the fifth possible implementation of the second aspect, in a sixth possible implementation of the second aspect, the first electronic device further includes a window status adjustment module, configured to: set the interface of the current foreground application to a focus window, and set the interface of the background application to a visible window. According to the sixth possible implementation of the second aspect, in a seventh possible implementation of the second aspect, the desktop screen includes icons of at least two applications, and the icons are highlighted based on use frequencies of the applications. According to the second aspect to the seventh possible implementation, in an eighth possible implementation of the second aspect, the second electronic device includes a camera; the first electronic device further includes a receiving module, configured to receive the content collected by the camera; and the sending module is further configured to send the content collected by the camera in real time to the second electronic device, so that the second electronic device displays the content collected by the camera in real time.

According to a third aspect, an electronic device is provided, and is configured to display a three-dimensional (3D) interface on a second electronic device. The electronic device includes a peripheral interface, a processor, and a memory. The memory is configured to store a program; and the processor is configured to execute the program in the memory, so that the electronic device performs the method according to any one of the first aspect to the eighth possible implementation.

According to a fourth aspect, a computer readable storage medium is provided, and includes an instruction. When the instruction is run on a computer, the computer is enabled to perform the method according to any one of the first aspect to the eighth possible embodiment. According to a fifth aspect, a computer program product including an instruction is provided. When the computer program product is run on a computer, the computer is enabled to perform the method according to any one of the first aspect to the eighth possible implementation.

### BRIEF DESCRIPTION OF DRAWINGS

To describe the technical solutions in the embodiments of this application more clearly, the following briefly describes the accompanying drawings required for describing the embodiments. It is clearly that the accompanying drawings in the following description show merely some implementations of this application.
FIG. 1 is a block diagram of an electronic device and a network in various implementations of this application;
FIG. 2 is a block diagram of an electronic device in various implementations;
FIG. 3 is a block diagram of a program module in various implementations;
FIG. 4 is a solid figure of electronic devices in various implementations;
FIG. 5a and FIG. 5b are schematic diagrams of a two-dimensional display manner and a three-dimensional display manner;
FIG. 6 is a flowchart of Embodiment 1 of a method according to an embodiment of this application;
FIG. 7 is a flowchart of implementing step 602 according to an embodiment of this application;
FIG. 8 is a flowchart of implementing step 604 according to an embodiment of this application;
FIG. 9 is a flowchart of Embodiment 2 of a method according to an embodiment of this application;
FIG. 10 is a flowchart of Embodiment 3 of a method according to an embodiment of this application;
FIG. 11 is a flowchart of implementing step 1003 according to an embodiment of this application;
FIG. 12 shows an example 1 of a display interface in a 3D mode according to an embodiment of this application;
FIG. 13a shows an example 2 of a display interface in a 3D mode according to an embodiment of this application;
FIG. 13b is a schematic diagram of opening an application in a display interface in a 3D mode according to an embodiment of this application;
FIG. 14 shows an example 3 of a display interface in a 3D mode according to an embodiment of this application;
FIG. 15a, FIG. 15b, and FIG. 15c show an example 4 of a display interface in a 3D mode according to an embodiment of this application; and
FIG. 16 is a schematic diagram of an internal structure of an electronic device according to an embodiment of this application.

### DESCRIPTION OF EMBODIMENTS

Persons skilled in the art will appreciate that the principles of this application may be implemented in any suitable arranged electronic device. In the following, embodiments of this application are described with reference to the accompanying drawings. It should be understood, however, that this application is not intended to be limited to the particular forms disclosed herein; rather, this application should be understood to cover all modifications, equivalents, and/or alternatives to the embodiments of this application. In describing the drawings, similar reference numerals may be used to indicate similar constituent elements.

As used in this application, the expression "has", "may have", "includes", or "may include" means that there is a corresponding feature (for example, a digit, a function, an operation or a component (such as a component)), but one or more other features are not excluded.

In this application, the expression of "A or B", at least one of "A or B", "one or more of A or/and B" may include all possible combinations of the listed entries. For example, the expression "A or B", "at least one of A and B" or "at least one of A or B" means all of: (1) including at least one A, (2) including at least one B, or (3) Include both at least one A and at least one B.

The expressions "first", "second", "the first", or "the second" used in various implementations of this application may modify various components, regardless of an order and/or importance, and the corresponding components are not limited. For example, first user equipment and second user equipment are different user equipments, but they are both user equipments. For example, without departing from the scope of this application, a first element may be referred to as a second element, and similarly, the second element may be referred to as the first element. It should be understood that, when an element (such as the first element) is expressed as (operably or communicatively) "connected" or "coupled" to another element (such as the second element), the element may be directly connected or directly coupled to the another element or any other element (such as a third element) may be inserted between the two. In contrast, it should be understood that when an element (such as the first element) is described as "directly connected" or "directly coupled" to another element (such as the second element), no element (such as the third element) is inserted between the two elements.

The expression "configured to" used in this application may be exchanged with " appropriate to", "capable of', "designed to", "adapted to", "made to", "can", or the like according to a situation. The term "configured to" does not necessarily imply "specifically designed to" in hardware. Alternatively, in some cases, the expression "device is configured to" may indicate that a device, together with another device or component "can". For example, a processor adapted to (or configured to) perform A, B, and C may represent a dedicated processor (such as an embedded processor) only configured to perform corresponding operations or a general purpose processor configured to perform corresponding operations by executing one or more software programs stored in a storage device. (such as a central processing unit (CPU) or an application processor (AP)).

The terms used in this application are merely for the purpose of describing specific embodiments, and are not intended to limit the scope of other embodiments. The singular representations may include plural representations unless they are explicitly different in the context. Unless otherwise defined, all terms (including technical and scientific terms) used in this application have the same meaning as commonly understood by persons skilled in the art in this application. Such terms (as those defined in commonly used dictionaries) may be interpreted as having a meaning equivalent to the meaning of the context in the related art, and they are not interpreted as having an ideal or over interpreted meaning, unless explicitly defined in this application. In some cases, even the terms defined in this application should not be construed as excluding the embodiments of this application.

An electronic device in an implementation of this application may include at least one of the following: an intelligent telephone, a tablet type personal computer (PC), a mobile phone, a video phone, an e-book reader, a desktop PC, a laptop PC, a notebook computer, a workstation, a server, a personal digital assistant (PDA), a portable multimedia player (PMP), an MPEG-1 audio layer-3 (MP3) player, a mobile medical device, a camera, or a wearable device. In various implementations, the wearable device may include at least one of the following: an accessory-type wearable device (such as a watch, a wristband, a bracelet, an anklet, a necklace, glasses, contact lenses, or a head-mounted device (HMD)), a fabric or clothing-integrated-type wearable device (such as electronic clothing), a wear-on-type wearable device (such as a protective gear or tattoos), or a bio-implantation-type wearable device (such as an implantable circuit).

In some implementations, the electronic device may be a household appliance. The household appliance may include, for example, at least one of the following: a television set, a digital video disc (DVD) player, an audio apparatus, a refrigerator, an air conditioner, a vacuum cleaner, a baking oven, a microwave oven, a washing machine, an air cleaner, a set-top box, a home automatic control panel, a security control panel, a TV box (such as Samsung Home Sync®, Apple TV®, or Google TV®), a game console (such as Xbox® and Play Station®), an electronic dictionary, an electronic key, a video camera, or an electronic photo frame.

In the following description, electronic devices in various implementations of this application are described with reference to the accompanying drawings. As used in this application, the term "user" may refer to a person using an electronic device or a device using an electronic device (for example, an artificial intelligence electronic device).

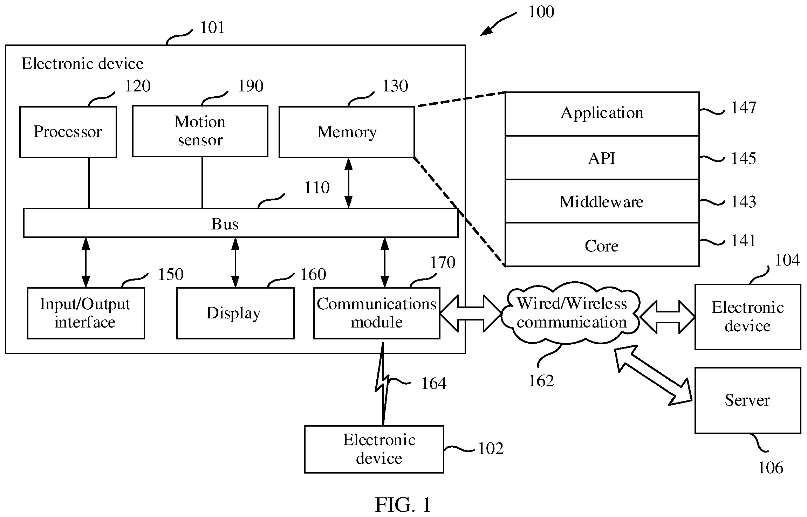

The electronic device 101 located within the network environment 100 in various implementations will be described with reference to Figure 1. The electronic device 101 may include a bus 110, a processor 120, a memory 130, an input/output interface 150, a display 160, and a communications interface 170. In some implementations, the electronic device 101 may omit at least one of the foregoing elements or may further include another element.

The bus 110 may include circuitry, such as, that interconnects the components 110-170 and delivers communications (such as control messages and/or data).

The processor 120 may include one or more central processing units (CPU), an application processor (AP), and/or a communication processor (CP). For example, the processor 120 may perform an operation or data processing related to control and/or communication of at least another component of the electronic device 101.

Memory 130 may include volatile memory and/or non-volatile memory. The memory 130 may store, for example, an instruction or data related to at least another component of the electronic device 101. Based on one implementation, the memory 130 may store software and/or programs. The program may include a kernel 141, a middleware 143, an application programming interface API 145, and/or an application program (or "application") 147. At least some of the kernel 141, the middleware 143, and the API 145 may be referred to as an operating system (OS).

The kernel 141 may control or manage, for example, system resources (such as the bus 110, the processor 120, and the memory 130) for performing operations or functions implemented in other programs (such as the middleware 143, the API 145, and the application program 147). In addition, the kernel 141 may provide an interface, and the middleware 143, API 145 or the application program 147 may access separate elements of the electronic device 101 by using the interface to control or manage system resources.

For example, middleware 143 may be used as an intermediary to allow API 145 or application 147 to communicate with kernel 141 to exchange data.

The middleware 143 may process, based on priorities of the task requests, the one or more tasks requests received from the application program 147. For example, the middleware 143 may allocate, to at least one of the application programs 147, a priority of a system resource (such as the bus 110, the processor 120, and the memory 130) used for using the electronic device 101. For example, the middleware 143 may perform scheduling or load balancing for one or more tasks requests by processing the one or more tasks requests based on the priorities assigned to the task requests.

The API 145 is an interface used by the application 147 to control functions provided by the kernel 141 or the middleware 143, and may include, for example, at least one interface or function (such as instructions) for file control, window control, image processing, or text control. The input/output interface 150 may serve as, for example, an interface to transfer an instruction or data input from a user or another external device to another (other) element of the electronic device 101. In addition, the input/output interface 150 may output an instruction or data received from another (other) element of the electronic device 101 to a user or another external device.

The display 160 may include, for example, a liquid crystal display (IXD), a light emitting diode (LED) display, an organic light emitting diode (OLED) display, a micro-electro-mechanical system (MEMS) display, and an electronic paper display. Display 160 may display various types of content (such as a text, an image, a video, an icon, or a symbol) to a user. The display 160 may include a touchscreen and receive touch input, posture input, proximity input or hover input, such as using an electronic pen or a part of the body of a user.

For example, the communications interface 170 may establish communication between the electronic device 101 and an external device (such as a first external electronic device 102, a second external electronic device 104, or a server 106). For example, the communications interface 170 may be connected to the network 162 through wireless or wired communication, to communicate with the external device (such as the second external electronic device 104 or the server 106).

The wireless communication may use, for example, at least one of the following as a cellular communication protocol: such as long term evolution (LTE), high level LTE (LTE-A), code division multiple access (CDMA), wideband CDMA (WCDMA), universal mobile telecommunications system (UMTS), wireless broadband (WiBro), and global mobile telecommunications system (GSM). In addition, wireless communications may include, for example, short-range communications 164. The short-range communication 164 may include at least one of the following: for example, Wi-Fi, Bluetooth®, near field communication (NFC), and global navigation satellite system (GPS). The wired communication may include at least one of the following: for example, a universal serial bus (USB), a high-definition multimedia interface (HDMI), a recommendation standard 232 (RS-232), and a plain old telephone service (POTS). The network 162 may include at least one of the following: a communications network (such as a computer network (such as a LAN or a WAN)), the Internet, and a telephony network. The first external electronic device 102 and the second external electronic device 104 may be devices of a same type or different types as the electronic device 101. Based on one implementation, the servers 106 may include a group having one or more servers. In various implementations, all or some of the operations performed in the electronic device 101 may be performed in another electronic device or a plurality of electronic devices (such as the electronic device 102 or 104 or server 106). Based on one implementation, when the electronic device 101 has to perform a function or service automatically or in response to a request, the electronic device 101 may request another device (such as the electronic device 102 or 104 or server) to perform at least some of the functions or services related to that function or service, instead of autonomously or additionally performing the function or service. Another electronic device (such as the electronic device 102, the 104, or the server 106) may perform a requested function or another function, and may transfer an execution result to the electronic device 101. The electronic devices 101 may process the received results as a present situation, additionally, processing the results and providing the requested functions or services. For this purpose, for example, cloud computing, distributed computing or client-server computing techniques may be used.

The electronic device 101 may include a motion sensor 190. The motion sensor is electrically connected to the processor 120, and obtains motion information of the electronic device 120. The motion sensor 190 may include at least one of the following: a linear acceleration sensor, a gyro sensor, and a geomagnetic sensor, which may sense linear acceleration, rotational angular acceleration or orientation information of the electronic device. The electronic device 101 may obtain motion information of the electronic device 101 based on an output value from a sensor. For example, the electronic device 101 may obtain the linear acceleration of the electronic device 101 based on an output value from the linear acceleration sensor. The electronic device 101 may obtain the rotational angular acceleration of the electronic device 101 based on an output value from a gyro sensor. The electronic device 101 may obtain the motion orientation information of the electronic device 101 based on an output value from each of the gyro sensor and the geomagnetic sensor.

In various implementations of this application, the processor 120 may be electrically connected to a display 160. In addition, the processor 120 may be electrically connected to a memory 130. The memory 130 may store instructions to instruct the processor 120 to perform inertial force correction to remove an inertial force component from the obtained motion information, and display a screen corresponding to the inertial force corrected motion information.

In various implementations of this application, the memory 130 may further store an instruction used to instruct, when the instruction is executed, the processor 120 to perform the following operations: obtaining an inertial component.

In various implementations of this application, the communications module 170 may receive an inertial component from another electronic device physically separate from the electronic device, and sense the inertial component.

In various implementations of this application, the memory 130 may further store an instruction used to instruct, when the instruction is executed, the processor 120 to perform the following operations: generating a correction vector by adding an inverse vector of the inertial acceleration corresponding to the inertial force and the acceleration corresponding to the motion information; and control display 160 to display the screen corresponding to the generated correction vector.

In various implementations of this application, the memory 130 may further store an instruction that is used to instruct, when the instruction is executed, the processor 120 to perform the following operations: obtaining a biometric measurement signal from at least one body part of the user when the user moves the electronic device; and removing an inertial component corresponding to the motion information obtained when the biometric measurement signal is not obtained. The electronic device 101 may further include a sensor. The sensor may obtain a biological measurement signal, and the processor 120 may obtain a biological measurement signal from the biological measurement signal sensor.

In various implementations of this application, the memory 130 may further store an instruction that is used to instruct, when the instruction is executed, the processor 120 to perform the following operations: determining whether the motion information is included in a preset range; and removing an inertial component corresponding to the motion information beyond the preset range.

In various implementations of this application, the memory 130 may further store an instruction that is used to instruct, when the instruction is executed, the processor 120 to perform the following operations: obtaining orientation information of the electronic device 101; and removing the inertial component corresponding to the motion information obtained when the orientation information is not changed.

In various implementations of this application, the memory 130 may further store an instruction for instructing the processor 120 to perform the following operation when the instruction is executed: removing an inertial force component corresponding to a linear component of the motion information

In various implementations of this application, the memory 130 may further store an instruction for instructing the processor 120 to perform the following operation when the instruction is executed: displaying a screen according to a rotation component of the motion information. The electronic device 101 may further include a camera module (not shown) that captures a plurality of images of an external environment of the electronic device and outputs the plurality of images to the processor. In various implementations of this application, the memory 130 may further store an instruction for instructing the processor 120 to perform the following operation when the instruction is executed: removing an inertial force component corresponding to the motion information obtained when the adjacent images of the plurality of images are not changed.

In various implementations of this application, the memory 130 may further store instructions for instructing the processor 120 to perform the following operations when the instructions are executed: obtaining electronic device motion information based on differences between adjacent images of the plurality of images; and the display is controlled to display a screen corresponding to the obtained exercise information.

In various implementations of this application, the memory 130 may further store instructions for instructing the processor 120 to perform the following operations when the instructions are executed: obtaining electronic device motion information based on the relative position of the electronic device relative to another electronic device; the display is controlled to display a screen corresponding to the obtained exercise information.

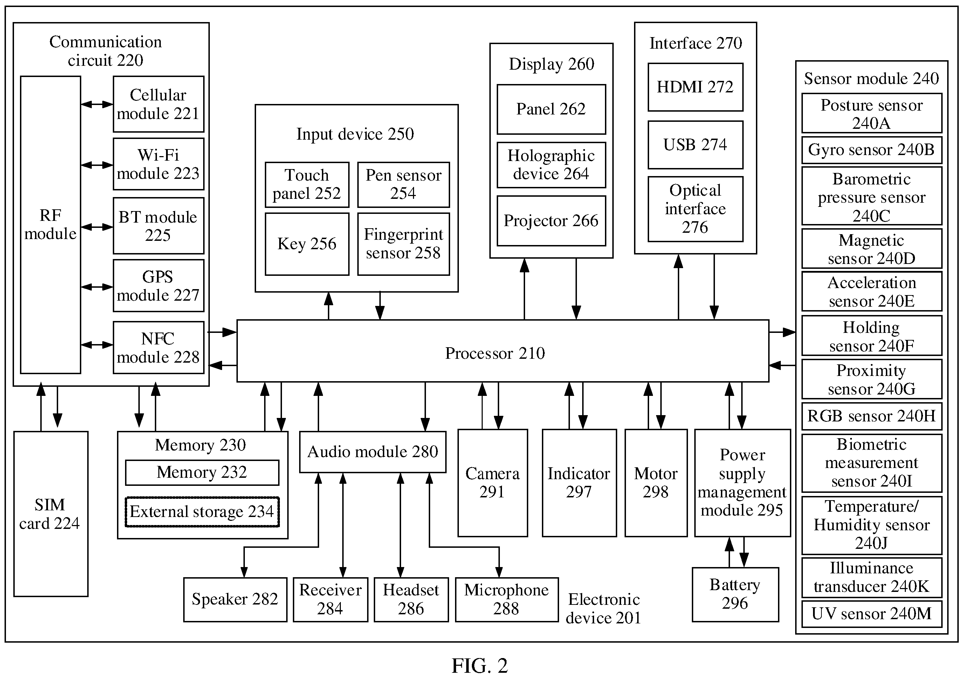

FIG. 2 is a block diagram of an electronic device 201 in various implementations. The electronic device 201 may include, for example, an entirety or a part of the electronic device 101 shown in FIG. 1. The electronic device 201 may include at least one application processor (AP) 210, a communications interface 220, a subscriber identity module 224, a memory 230, a sensor module 240, an input device 250, a display 260, an interface 270, an audio interface 280, a camera module 291, a power management unit 295, a battery 296, an indicator 297, and a motor 298.

The processor 210 may drive, for example, an operating system or an application program to control a plurality of hardware or software elements connected to the processor 210, and perform various types of data processing and operations. The processor 210 may be implemented, for example, by the system on chip (SoC). According to an embodiment, the processor 210 may further include a graphics processing unit (CPU) and/or an image signal processor. The processor 210 may further include at least some of the elements shown in FIG. 2 (such as the cellular module 221). The processor 210 may load, in the volatile memory, an instruction or data received from at least one (such as a nonvolatile memory) of the another element to process the loaded instruction or data, and may store various types of data in the nonvolatile memory.

The communications module 220 may have a configuration that is equivalent or similar to that of the communications interface 170 in FIG. 1. The communications module 220 may include, for example, a cellular module 221, a Wi-Fi module 223, a Bluetooth (BT) module 225, a GPS module 227, an NFC module 228, and a radio frequency (RF) module 229.

The cellular interface 221 may provide voice calls, video calls, text message services or Internet services, for example, over a communications network. According to one embodiment, the cellular module 221 may use the subscriber identity module 224 (such as a SIM card) to distinguish and authenticate the electronic devices 201 within the communications network. According to one embodiment, the cellular module 221 may perform at least some of the functions that may be provided by the processor 210. According to an embodiment of this application, the cellular module 221 may include a communication processor (CP).

Each of the Wi-Fi module 223, BT module 225, GPS module 227, and NFC module 228 may include, for example, a processor configured to process data transmitted or received by using a corresponding module. According to some implementations, at least some (two or more) of the cellular module 221, the Wi-Fi module 223, the BT module 225, the GPS module 227, and the NFC module 228 may be included in one integrated chip (IC) or IC package.

The RF module 229 may transmit or receive, for example, a communication signal (such as an RF signal). The RF module 229 may include, for example, a transceiver, a power amplification module (PAM), a filter, a low noise amplifier (LNA) or an antenna. According to another implementation of this application, at least one of the cellular modules 221, the Wi-Fi module 223, the BT module 225, the GPS module 227, and the NFC module 228 may transmit or receive an RF signal by using a separate RF module.

The subscriber identity module 224 may include, for example, a card with a subscriber identity module (SIM) and/or an embedded SIM and include unique identity identification information (such as an integrated circuit card identifier (ICCID)) or subscriber information (such as an international mobile subscriber identity (IMSI)).

The memory 230 (such as the memory 130) may include, for example, an internal memory 232 or an external memory 234. The internal memory 232 may include, for example, at least one of a volatile memory (such as a dynamic random access memory (DRAM), a static RAM (SRAM), and a synchronous dynamic RAM (SDRAM)) and a non-volatile memory (such as a one-time programmable read-only memory) (OTPROM), a programmable ROM (PROM), an erasable programmable ROM (EPROM), an electrically erasable programmable ROM (EEPR0M), a mask ROM, a flash memory ROM, a flash memory (such as a NAND flash memory or a NOR flash memory), a hard disk drive, or a solid state drive (SSD).

The external memory 234 may further include a flash memory drive, such as a compact flash memory (CF), a secure digital (SD), a micro secure digital (Micro-SD), a mini secure digital (Mini-SD), a multimedia card (MMC), a memory stick, and the like. The external memory 234 may be functionally and/or physically connected to the electronic device 201 through various interfaces.

The sensor module 240 may measure a physical quantity or detect an operating status of the electronic device 201, and may convert measured or detected information into an electrical signal. The sensor module 240 may include, for example, at least one of the following: posture sensor 240A, gyroscope sensor 240B, barometric pressure sensor 240C, magnetic sensor 240D, acceleration sensor 240E, holding sensor 240F, proximity sensor 240G, color sensor 240H (such as red, green, and blue (RGB) a sensor), a biometric measurement sensor 2401, a temperature or humidity sensor 240J, an optical sensor 240K, and an ultraviolet (UV) sensor 240M. Additionally or alternatively, the sensor module 240 may include, for example, an electronic nose Slimming sensor, an electromyographic image (EMG) sensor, an electroencephalogram (EEG) sensor, an electrocardiogram (ECG) sensor, an infrared (IR) sensor, an IRIS sensor, and/or a fingerprint sensor. The sensor module 240 may further include a control circuit configured to control at least one sensor included in the sensor module 240. In some implementations, the electronic device 201 may further include a processor. The processor is configured as a part of the processor 210 or is independent of the processor 210, and controls the sensor module 240, to control the sensor module 240 when the processor 210 is in the sleep state.

The input device 250 may include, for example, a touch panel 252, (digital) pen sensor 254, a key 256 or a fingerprint sensor 258. The touch panel 252 may use at least one of a capacitance type, a resistance type, an infrared type, and an ultrasonic type. In addition, the touch panel 252 may further include a control circuit. The touch panel 252 may further include a tactile layer, to provide a tactile reaction to the user.

The (digital) pen sensor 254 may include, for example, as a part of the touch panel or an identification plate independent of the touch panel. The key 256 may include, for example, a physical button, an optical key, or a small keyboard the fingerprint sensor 258 may detect fingerprint data.

The display 260 (for example, the display 160) may include a panel 262, a holographic device 264 or a projector 266. The panel 262 may include a configuration that is the same as or similar to that of the display 160 shown in FIG. 1. The faceplate 262 may be implemented, for example, as flexible, transparent or wearable. The panel 262 and the touch panel 252 may be implemented as one module. The holographic device 264 may display a three-dimensional image in the air by using light interference. A projector 266 may project light onto the screen for displaying an image. For example, the screen may be located inside or outside the electronic device 201. According to an implementation, the display 260 may further include a control circuit for the control panel 262, the holographic device 264 or the projector 266.

An interface 270 may include, for example, a high-definition multimedia interface (HDMI) 272, a Universal Serial Bus (USB) 274, and an optical module 276. The interface 270 may be included in, for example, the communications interface 170 shown in FIG. 1. Additionally or alternatively, the interface 270 may include, for example, a mobile high-definition link (MHL) interface, a secure digital (SD) card/multimedia card (MMC) interface, or an Infrared Data Association (IrDA) standard interface.

An audio module 280 may perform bidirectional conversion on, for example, a sound and an electrical signal. At least some elements in the audio module 280 may be included in, for example, the input/output interface 145 shown in FIG. 1. The audio module 280 may process sound information that is input or output by using, for example, a speaker 282, a receiver 284, a headset 286 or a microphone 288.

Based on implementation, the camera module 291 that is capable of taking still images and dynamic images may include one or more image sensors (such as a front sensor or a back sensor), a lens, an image signal processor (ISP) or a flash (such as LED, xenon lamp, or the like).

The power management unit 295 may manage, for example, a power supply of the electronic device 201. Based on an implementation, the power management unit 295 may include a power management integrated circuit (PMIC), a charger 1 C or a battery table. The PMIC may use wired and/or wireless charging methods. Examples of the wireless charging method may include a magnetic resonance method, a magnetic induction method, an electromagnetic method, and the like. Additional circuitry for wireless charging (such as coil loop, resonant circuit, rectifier, and the like) may be further included. The battery table may measure, for example, the remaining battery power of the battery 296 and the voltage, current or temperature during charging. The battery 296 may include, for example, a rechargeable battery and/or a solar battery.

The indicator device 297 may display a particular state of the electronic device 201 or a portion (such as the processor 210) of the electronic device 201, such as a startup status, a message status, a charging status. The motor 298 may convert the electrical signal into mechanical vibration, and may generate a vibration effect or a tactile effect. Although not shown, the electronic device 201 may include a processing unit (such as a GPU) configured to support the mobile television (TV). A processing unit for supporting mobile TV can process media data based on standards such as Digital Multimedia Broadcasting (DMB), Digital Video Broadcasting (DVB), MediaFLO™, and the like.

Each of the foregoing component elements based on the hardware of this application may be configured with one or more components and the corresponding component element name may be varied based on the electronic device type. The electronic device in various implementations of this application may include at least one of the foregoing elements. Some components may be omitted or another component may be further included in the electronic device. In addition, some of the hardware components in the implementations may be combined into an entity, and the entity may perform a same function as a related component before combination.

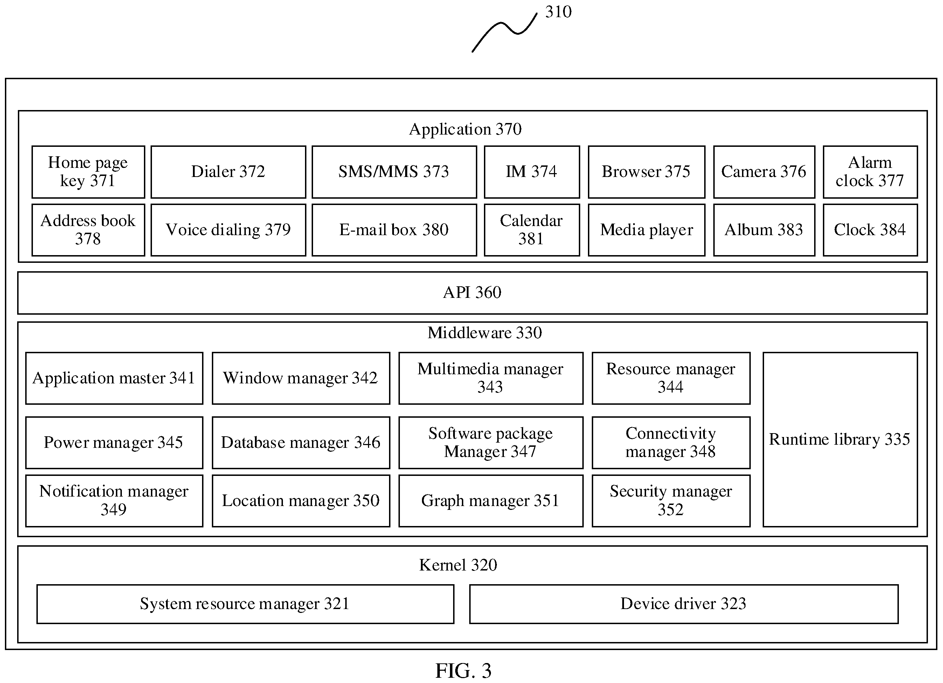

FIG. 3 is a block diagram of a program module in various implementations of this application. Based on one implementation, a program module 310 (such as a program) may include an operating system (OS) configured to control resources associated with the electronic device (such as the electronic device 101) and/or various applications (such as the applications 147) executing in the operating system. The operating system may be, for example, Android®, iOS®, Windows®, Symbian®, Tizen® or Samsung BadaOS®, and the like.

The program module 310 may include a kernel 320, a middleware 330, an application programming interface (API) 360, and/or an application 370. At least some of the program modules 310 may be pre-installed on the electronic device or may be downloaded from an external electronic device (such as the electronic device 102, 104 or the server 106).

The memory 320 (such as the memory 141) may include, for example, a system resource manager 321 and/or a device driver 323. System resource manager 321 may control, allocate or collect system resources. Based on one implementation, the system resource manager 321 may include a process manager, a memory manager or a file system manager. The device driver 323 may include, for example, a display driver, a camera driver, a Bluetooth driver, a shared memory driver, a USB driver, a keypad driver, a Wi-Fi driver, an audio driver or an inter-process communication (IPC) driver.

The middleware 330 may provide the functions jointly required by the applications 370. Alternatively, it may provide various functions to the applications 370 by using the API 360, so that the applications 370 may use limited system resources in the electronic device effectively. Based on one implementation, the middleware 330 (such as the middleware 143) may include, for example, at least one of the following: a runtime library 335, an application manager 341, a window manager 342, a multimedia manager 343, a resource manager 344, a power manager 345, a database manager 346, a software package manager 347, a connectivity manager 348, a notification manager 349, a location manager 350, a graphics manager 351, and a security manager 352.

Runtime library 335 may include a library module that uses the library module to add new functions in a programming language when the application 370 is executed. Run-time library 335 may perform input/output management, memory management or functions for arithmetic functions.

The application manager 341 may, for example, manage a lifetime of at least one of the applications 370. The window manager 342 may manage the graphical user interface (GUI) resources used on the screen. A multimedia manager 343 may identify the format needed to reproduce the various media files and encode or decode the media files using codes appropriate for the corresponding format. A resource manager 344 may manage resources of at least one of the applications 370, such as source code, memory or storage space.

The power manager 345 may operate with, for example, the basic input/output system (BIOS) to manage a battery or a power supply, and may provide power source information required for the electronic device to operate. The database manager 346 may generate, search or change a database to be used for at least one of the applications 370. The software package manager 347 may manage installation or update of an application distributed in a form of a software package file.

The connectivity manager 348 may manage wireless connectivity, such as Wi-Fi or BT. The notification manager 349 may display or notify the user of an event, such as an arrival message, arrangement, or proximity notification, without disturbing the user. The location manager 350 may manage the location information of the electronic device. A graph manager 351 may manage the graphical effects provided to the user and the user interface associated with the graphical effects. A security manager 352 may provide all security functions required for system security or user verification. According to one implementation, when an electronic device (such as an electronic device 101) has a telephony call function, middleware 330 may further include a telephony manager configured to manage voice call functions or video call functions of the electronic device.

The middleware 330 may include a middleware module, where the middleware module forms a combination of various functions of the foregoing components. The middleware 330 may provide dedicated modules based on the operating system type, to provide different functions. Additionally, the middleware 330 may dynamically remove some of the existing elements or may add new elements.

An API 360 (such as API 145) is, for example, an API programming function set, and may employ different configurations based on the OS. For example, in the case of Android® or iOS®, one set of API may be provided for each platform, while in the case of Tizen®, two or more sets of API may be provided for each platform.

The applications 370 (such as the applications 147) may include, for example, one or more applications that are capable of performing the functions, the functions are, for example, a home page key 371, a dialer 372, a short message service (SMS)/multimedia message service (MMS) 373, an instant message (IM) 374, a browser 375, a camera 376, an alarm clock 377, an address book 378, a voice dialer 379, an E-mail box 380, a calendar 381, a media player 382, an album 383, a clock 384, and a security button. (such as a measurement exercise amount or blood glucose) or environment information (such as atmospheric pressure, humidity or temperature information).

According to one implementation, the application 370 may include an application (referred to as "information exchange application" below for ease of description) that supports information exchange between the electronic device (such as the electronic device 101) and an external electronic device (such as the electronic device 102 or 104). Applications associated with the information exchange may include, for example, a notification relay application for communicating specific information to external electronic devices or a device management application for managing external electronic devices.

For example, informing the relay application may include the following functions: notification information generated from another application (such as an SMS/MMS application, an email application, a security application or an environment information application) of the electronic device 101 is transferred to an external electronic device (such as the electronic device 102 or 104). In addition, the notification relay application may receive notification information, for example, from an external electronic device, and provide the received notification information to the user.

A device management application may manage (such as install, delete, or update) at least one function of an external electronic device (such as the electronic device 102, 104 or the server 106) that communicates with the electronic device. (such as enabling/disabling a function of an external electronic device (or some elements thereof), or adjusting a function of illuminance (or resolution) of a display, an application running in an external electronic device or a service (such as a call service or a message service) provided by an external electronic device. According to one implementation, the application 370 may include an application (such as a health care application on a mobile medical server, and the like) specified in accordance with an attribute of the external electronic device 102 or 104. According to one implementation, the application 370 may include an application received from an external electronic device (such as server 106, electronic device 102 or 104). According to an implementation, the application 370 may include a pre-loaded application or a third-party application that can be downloaded from the server. According to the foregoing implementations of this application, a name of an element of the program module 310 may be changed based on an OS type.

According to an example implementation of this application, at least some of the program modules 310 may be implemented in software, firmware, hardware or a combination or a combination of at least two or more of the above. At least some of the program modules 310 may be implemented (such as executed) by, for example, a processor (such as processor 210). At least some of the program modules 310 may include, for example, modules, programs, routines, instruction sets, and/or processes for performing one or more functions.

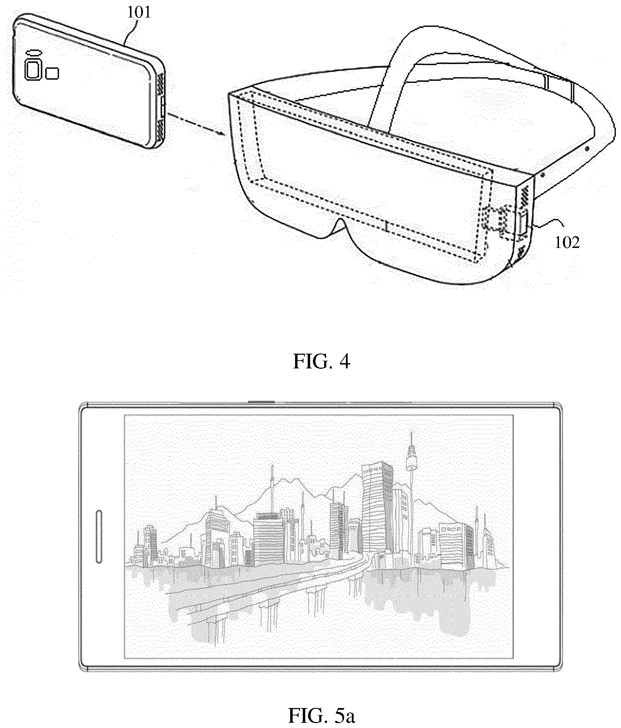

FIG. 4 is a solid figure of an electronic device 101 and an electronic device 102 according to an embodiment of this application. The electronic device 101 may include a display. The electronic device 101 may store a virtual reality application. The virtual reality application may be an application that can provide a user with a display similar to actual reality. According to an implementation, the virtual reality application may display a left-eye image and a right-eye image corresponding to each eye of the user based on a stereoscopic scheme.

An electronic device 102 may be a head-mounted display. The electronic device 102 may be mounted on a user's head and fixed to the user's head, even if the user moves. In addition, the electronic device 102 may further fix the electronic device 101, and therefore the user may observe an image displayed on the electronic device 101.

The electronic device 102 may include a housing provided for wearing on a head of a user, and optionally, at least one input button disposed in an area of the housing. The electronic device 102 may further include an input board, and the input board may receive touch input from a user. The electronic device 102 may input by using another device, such as a remote control, a remote control handle, and the like.

The electronic device 101 may be coupled to the electronic device 102. The electronic device 101 may be connected to the electronic device 102 in a wired or wireless manner. For example, the electronic device 101 may be connected to the electronic device 102 based on a USB, which is merely an example. In addition, persons skilled in the art may easily understand that a connection is not limited, provided that data transmission/receiving between the two devices 101 and 102 can be implemented by using the connection. According to another implementation, the electronic device 101 may be simply physically coupled to the electronic device 102.

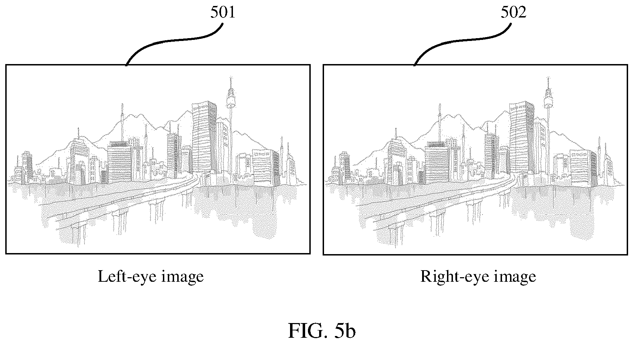

The electronic device 101 may perform dimension conversion processing on the to-be-displayed interface to obtain the left-eye image and the right-eye image in the to-be-displayed interface, where the left-eye image and the right-eye image are used to present the to-be-displayed interface having the three-dimensional visual effect. FIG. 5a shows a to-be-displayed interface. FIG. 5b shows a left-eye image 501 and a right-eye image 502 of the to-be-displayed interface.

It should be understood that, in this embodiment of this application, the dimension conversion processing refers to converting an interface of a two-dimensional (2D) application program into an interface with a three-dimensional (3D) visual effect or converting an interface of a three-dimensional application program into an interface with a two-dimensional visual effect. It should be further understood that, in this embodiment of this application, the left-eye image is an image generated for the left-eye angle of view of the user, and the right-eye image is an image generated for the right-eye angle of view of the user.

The electronic device 102 may have an independent screen. In this case, the left-eye field of view is an area seen by a left eye of a user on the screen, the electronic device 101 displays a left-eye image in the area, the right-eye field of view is an area seen by a right eye of the user on the screen, and the electronic device 101 displays a right-eye image in the area, the left-eye image and the right-eye image are displayed in left and right eyes of a user by using a corresponding optical lens group; if the electronic device 102 has no independent screen, the left-eye field of view is an optical lens group aligned with a left eye of the user on the electronic device 102, and the electronic device 101 displays the left-eye image in an area aligned with the optical lens group on the external screen, the right-eye field of view area is an optical lens group aligned with the right-eye of the user on the electronic device 102. The electronic device 101 displays the right-eye image in an area aligned with the optical lens group on the external screen, and the left-eye image and the right-eye image are finally displayed in left and right eyes of the user through optical path deformation. In this way, the second left-eye image and the second right-eye image are separately displayed on the left eye and the right eye of the user by using the left-eye angle of view area and the right-eye angle of view area of the electronic device 102, the user can synthesize a stereo image in the brain, and present a to-be-displayed interface of a three-dimensional effect.

In this application, the electronic device 101 may work in the common mode or the 3D mode. For example, the electronic device 101 is a mobile phone, and the electronic device 101 works in a common mode, and is used in normal status of a mobile phone. The mobile phone displays an interface of an application or displays a desktop screen. When it is detected that the user chooses to open an application, the mobile phone except a status bar and a system bar, only this application is displayed. Certainly, when the mobile phone supports floating display or screen splitting display, a case in which two application interfaces are simultaneously displayed on the mobile phone may exist. When the electronic device 101 works in the 3D mode, the electronic device 101 provides a 3D interface displaying the plurality of windows at the same time. The 3D interface may be displayed by using a display screen of the electronic device 102 or may be displayed by the electronic device 101. The user may view the 3D interface by using an optical lens of the electronic device 102 (such as an HMD).

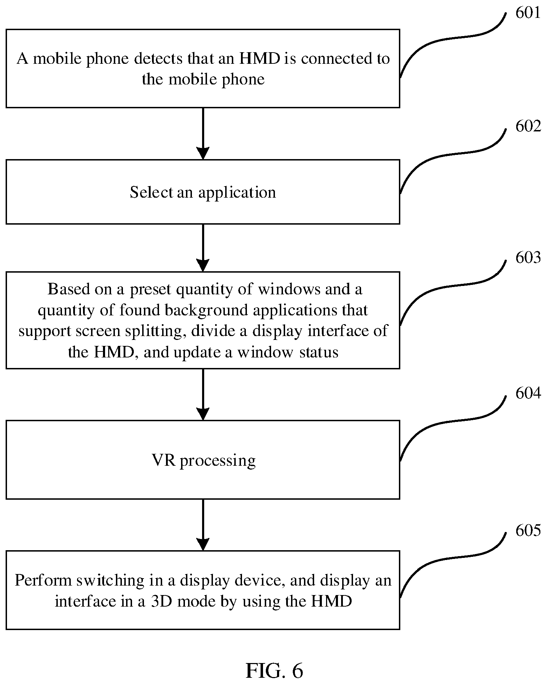

For example, the electronic device 101 is a mobile phone, the electronic device 102 is a wearable device, and the wearable device is a head-mounted display (HMD, Head Mount Display) with a display. In a 3D mode, display interfaces of a plurality of windows are displayed on the HMD device, and the plurality of windows may be a plurality of application interfaces or a plurality of desktop screens, or the application interface and the desktop screen coexist. Referring to FIG. 6, Embodiment 1 of an interface display method in this embodiment of this application includes the following steps.

601. The mobile phone detects that the HMD is connected to the mobile phone.

The HMD may be connected to the mobile phone in a wired or wireless manner, such as a USB connection. The mobile phone may detect, by using a USB interface of the mobile phone, that the HMD is connected to the mobile phone, such as a Bluetooth connection. The mobile phone may detect the connection of the HMD by using a Bluetooth module of the mobile phone. This embodiment of this application is not limited to the foregoing two connection manners. Persons skilled in the art may know various implementations of detecting that the mobile phone is connected to the HMD. Details are not described herein.

If it is detected that the HMD is connected for the first time, an HMD driver is automatically installed; or if it is detected that the HMD is not connected for the first time, no driver needs to be installed.

Further, the mobile phone obtains performance of the HMD. Specifically, a display manager module in the mobile phone registers and manages the HMD, including reading a length, a width, resolution, and the like of a display area of the HMD. In this process, an HMD that does not match the mobile phone or an HMD that does not support multi-window display needs to be filtered out, and a user is prompted.

After registration is completed, VR_DISPLAY_DEVICE_CONNECTED system broadcast (in a connected state, switching to a 3D mode is triggered in another manner, for example, a manner in which a switch in the 3D mode of the HMD device is turned on. In this case, other broadcast similar to VR_DISPLAY_DEVICE_OPEN or the like is correspondingly sent) is sent. All listeners are notified, and the listeners are system services and applications.

If the HMD supports multi-window display, in this case, a display interface of the mobile phone may prompt that switching to the 3D mode is being performed, or the mobile phone directly locks a screen and screens off.

After the display manager module registers and manages the HMD, the display manager module notifies, through broadcasting, an upper-layer system service and all applications that the HMD is connected, to prepare to enter the 3D mode. The upper-layer system service includes services such as an AMS (Activity Manager Service) and a WMS (Window Manager Service), and selects an application and updates a window status.

602. The mobile phone selects an application.

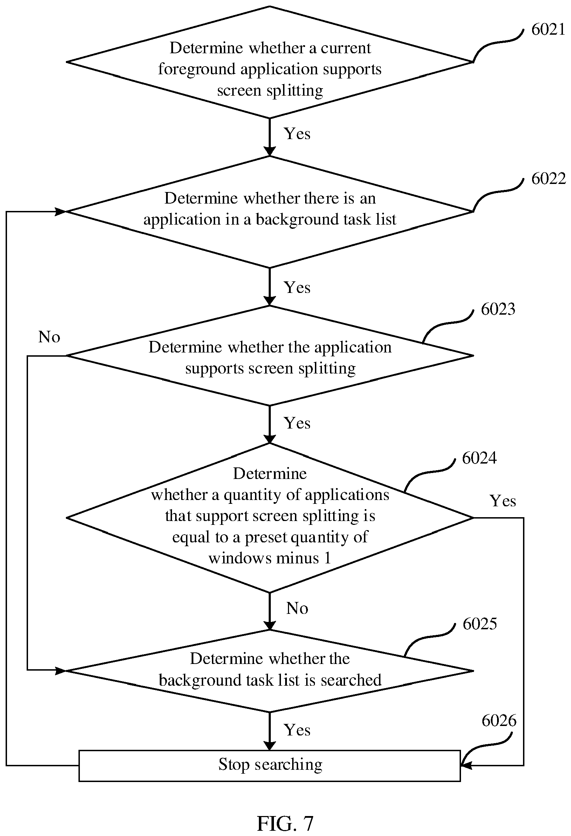

Specifically, as shown in FIG. 7, the following steps are included.

6021. Determine whether a current foreground application supports screen splitting; and if the foreground application supports screen splitting, perform step 6022; or if the foreground application does not support screen splitting, skip continuing to perform the following procedure, and after a VR mode is switched to, maximally display, by default, the foreground application used before the switching, and skip displaying another application interface.

Whether an application supports screen splitting is determined by design of the application. That an application supports screen splitting means that content such as an application and a desktop screen other than the application is allowed to be displayed in the display interface in a split-screen form.

6022. Determine whether an application exists in a background task list; and when there is the application, perform step 6023; or when there is no application, skip continuing to perform the following procedure, and after the VR mode is switched to, maximally display, by default, a window of the foreground application before the switching, and skip displaying another application window.

6023. Determine whether the application supports screen splitting; and if screen splitting is supported, perform step 6024; or if screen splitting is not performed, perform step 6025.

In a search process, if an application supports screen splitting, marking is performed.

6024. Determine whether a quantity of found applications that support screen splitting is equal to a quantity of applications that need to be searched for and that support screen splitting; and if the quantity of found applications is not equal to the quantity of applications that need to be searched for, perform step 6025; or if the quantity of found applications is equal to the quantity of applications that need to be searched for, perform step 6026 to stop searching.

The quantity of applications that need to be searched for and that support screen splitting is a preset quantity of windows minus one, and the preset quantity of windows is 3. Therefore, in addition to the current foreground application, the quantity of applications that need to be searched for and that support screen splitting is 2.

The preset quantity of windows may be set by the mobile phone based on the performance of the HMD, for example, may be set based on a size of the HMD.

6025. Determine whether the background task list is searched; and if the background task list is searched, perform step 6026 to stop searching; or if the background task list is searched, perform step 6022 to search the background task list for a next application. During searching, search for other split-screen applications in a reverse order based on a time of using an application, in other words, start searching from a recently used application.

If the background task list does not include an application that supports screen splitting, the foreground application used before the switching is maximally displayed by default, and another application interface is not displayed.

After the split-screen application is selected, the AMS sends a VR_WINDOWS_SEARCH_FINISHED message to the WMS.

603. Based on the preset quantity of windows and the quantity of found background applications that support screen splitting, divide a display interface of the HMD, and update a window status.

The preset quantity of windows may be set by the mobile phone based on the performance of the HMD, for example, may be set based on the size of the HMD. A window of the foreground application is marked as a focus (Topmost) state, and the focus state is a special visible state. Windows of N selected background applications that are recently used by the user are marked as visible states. The window of the application is an interface of the application.

For example, if the preset quantity of windows is 2, and no background application that supports screen splitting is found, the foreground application is maximally displayed on the HMD.

If the preset quantity of windows is 3, and one background application that supports screen splitting is found, the display interface of HMD is divided into two areas, and the foreground application and the background application each are set to occupy a half of the display interface. For example, an application in the topmost state is set to be displayed in a left-side area, and the other split-screen application is set to be displayed in a right-side area.

If the preset quantity of windows is 3, and two background applications that support screen splitting are found, the display interface is divided into three areas. For example, an application in the topmost state is set to be displayed in a middle area, and the other two split-screen applications are respectively set to be displayed in areas on two sides of the middle area.

The foregoing example is merely an example of this application. Adjustment may be performed based on the performance and a configuration that are of the HMD.

The WMS mainly update the window status, including: marking the current foreground application as the topmost state; and changing, to visible states, windows of two split-screen applications that are searched for and marked by the AMS.

After completing processing, the WMS sends a VR_WINDOWS_UPDATE_FOR_3D_FINISHED message to a message queue of the WMS. 604. Perform VR processing on all windows that are of applications and that are marked as visible states.

VR processing is performed on all visible system windows; and VR processing is performed on the current foreground application and the N selected background applications recently used by the user. The VR processing is to convert a 2D interface into a 3D interface, for example, three-dimensional processing is performed on an icon of a to-be-displayed split-screen interface, an application interface, and the like. If an application supports VR, VR processing is performed, to switch the icon, the application interface, and the like to an icon, an application interface, and the like that have a 3D effect. If an application does not support VR, VR processing is not performed.

All the windows that are of the applications and that are marked as the visible states include a window of the application in the topmost state.

As shown in FIG. 5a, when performing an operation in a common mode, the mobile phone may display an operation picture. After VR processing is performed, the operation picture may be displayed in a 3D effect. As shown in FIG. 5b, when the mobile phone performs an operation in a 3D mode, the operation picture may be divided into a left-eye image 501 corresponding to a left eye of the user and a right-eye image 502 corresponding to a right eye of the user. Specifically, after receiving the VR_WINDOWS_UPDATE_FOR_3D_FINISHED message, the WMS traverses all application lists that are set to visible states, and a 3D layout manner is reused in each window that is of an application and that is set to a visible state, and 3D picture resources may be referenced for display.

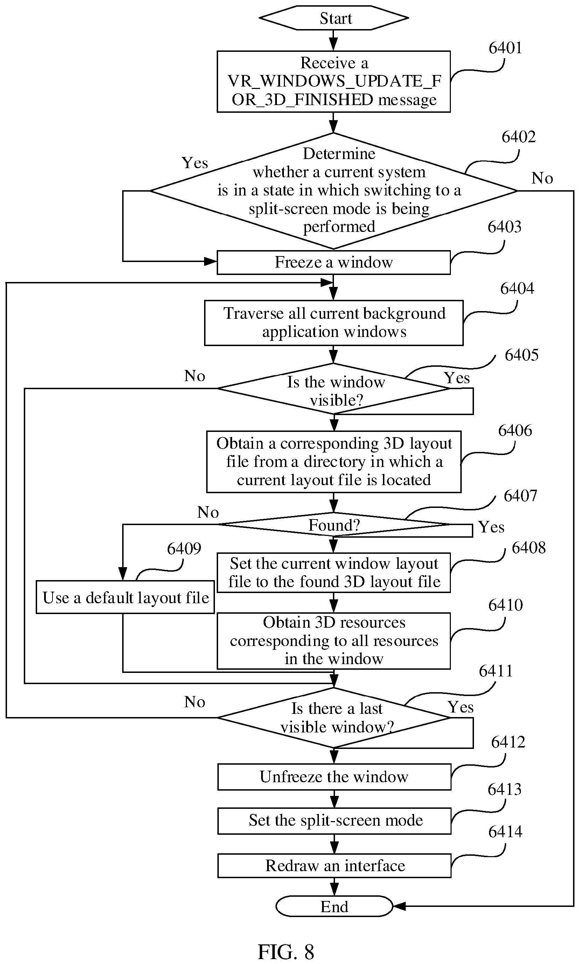

A system public control, a system presetapplication, and a third-party application supporting VR carry, by default, two sets of static picture resources corresponding to layout file machines. One set of static picture resources is default 2D resources displayed on a mobile phone screen, the other set of static picture resources is 3D resources (these 3D resources are drawn in advance by a UI designer by using drawing software, and a 3D effect can be displayed by using an optical device of the HMD). As shown in FIG. 8, a specific 2D and 3D switching process is as follows:
Step 6401: The WMS receives the VR_WINDOWS_UPDATE_FOR_3D_FINISHED message.
Step 6402: Determine whether a current system is in a state in which switching to a 3D mode is being performed, and if the current system is in the state, perform step 6403; or if the current system is not in the state, end the procedure.
Step 6403: Freeze a window, and prohibit a user from entering an event, in other words, in this case, skip processing an input event of the user, where the window is an interface of an application.
Step 6404: Start to traverse windows of all background applications.
Step 6405: Determine whether the window of the application is in a visible state; and if the window of the application is in the visible state, perform step 6406; or if the window of the application is not in the visible state, perform step 6411.
Step 6406: Search for a 3D layout file of the application.
Step 6407: Determine whether a 3D layout file of the application is found; and if the 3D layout file of the application is found, perform step 6407; or if the 3D layout file of the application is not found, perform step 6409 to keep unchanged, and use a current layout file.
Step 6408: Set a layout file of the window of the application to the found 3D layout file.
Step 6410: Obtain 3D resources corresponding to all elements in the window, in other words, obtain 3D resources corresponding to elements such as an icon, a text, and the like in the window.
Step 6411: Determine whether the application is a last application; if the application is the last application, perform step 6412; or if the application is not the last application, perform step 6404 to find a next application, and repeatedly perform steps 6404 to 6411.
Step 6412: Unfreeze the window to receive the input event of the user.
Step 6413: Set the 3D mode.
Step 6414: Draw a display interface.

In the foregoing process, if the windows that are of the background applications and that are traversed in step 6404 may be windows of applications visible to windows, correspondingly, step 6405 is not performed.

605. Perform switching in a display device, and display an interface in the 3D mode by using the HMD.

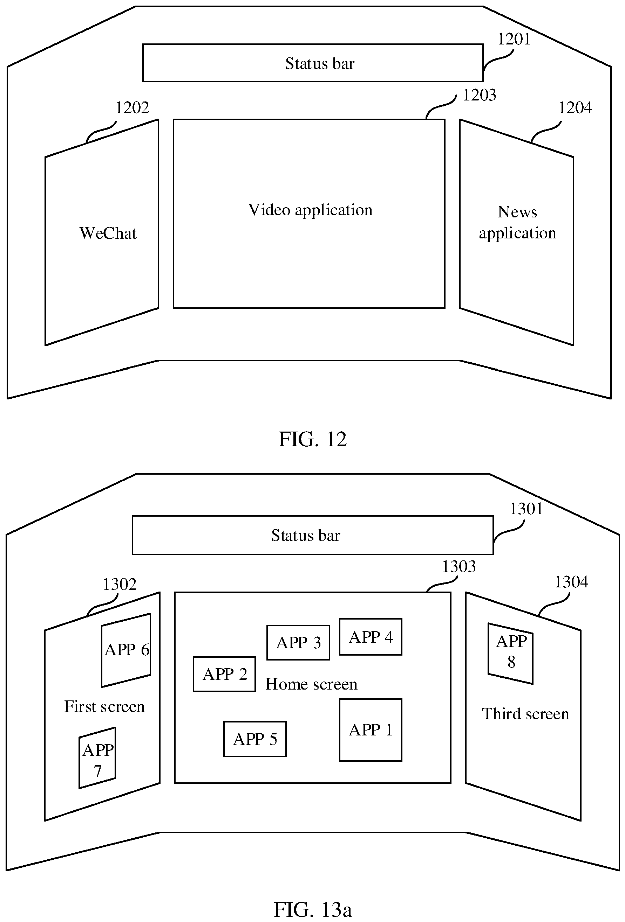

The mobile phone sends a processed VR interface to the HMD for display. The display interface of the mobile phone may prompt that "the 3D mode is entered", or a screen-off/screen-locked state is entered. As shown in FIG. 12, an NBA game live broadcast picture that is live broadcast by a video application 1203 is displayed in a middlemost position in a user's line of sight. A WeChat chat software interface 1202 is displayed on a left side, and a news reference interface 1204 is displayed on a right side.

Optionally, after the mobile phone is connected to the HMD, the mobile phone may not immediately prepare to switch to the 3D mode. For example, in the foregoing embodiment, after step 601, whether the user turns on, on the mobile phone, a switch entering the 3D mode is detected; and if the user turns on, on the mobile phone, the switch entering the 3D mode, steps 602 to 605 are performed. Alternatively, after step 601, it is determined whether a switch turn-on notification sent by the HMD is received, and a hardware switch is disposed on the HMD. When it is detected that the user turns on the hardware switch, the HMD notifies the mobile phone that the mobile phone continues to perform steps 602 to 605. Alternatively, after step 601, it is determined whether the HMD is worn. When detecting that the user wears the HMD, the HMD notifies the mobile phone that the mobile phone continues to perform steps 602 to 605. Otherwise, the mobile phone does not continue to perform steps 602 to 605.

The foregoing current foreground application may be a foreground application that prepares to switch to the 3D mode. For example, the mobile phone detects a foreground application connected to the HMD. Alternatively, the mobile phone detects that the user turns on, on the mobile phone, the switch entering the 3D mode. Alternatively, the mobile phone receives a notification from the HMD to prepare to switch to the foreground application in the 3D mode. Optionally, after the mobile phone prepares to be in the 3D mode, the mobile phone does not immediately switch to the 3D mode. For example, in the foregoing embodiment, after steps 601 to 604 are performed, whether the user turns on, on the mobile phone, the switch entering the 3D mode. If the user turns on, on the mobile phone, the switch entering the 3D mode, step 605 is performed. Alternatively, after steps 601 to 604 are performed, it is determined whether a switch turn-on notification sent by the HMD is received, and a hardware switch is disposed on the HMD. When it is detected that the user turns on the hardware switch, the HMD notifies the mobile phone that the mobile phone continues to perform step 606. Alternatively, after steps 601 to 604 are performed, it is determined whether the HMD is worn. When detecting that the user wears the HMD, the HMD notifies the mobile phone that the mobile phone continues to perform step 605. Otherwise, the mobile phone does not continue to perform step 605.

In the embodiment in FIG. 6, the wearable device is an HMD with a display. Optionally, the wearable device is an HMD without a display, the mobile phone is placed into the HMD, and the user views display content of the mobile phone by using an optical lens of the HMD. In this case, if the HMD and the mobile phone are connected in a wired connection manner or a wireless connection manner, in the foregoing embodiment, adjustment may be performed to perform step 601. In steps 602 and 603, the preset quantity of display windows in the 3D mode may be determined based on the performance of the mobile phone. Adjustment is performed in step 605 to display a processed VR interface on a display screen of the mobile phone. If there is no communication connection between the HMD and the mobile phone, in the embodiment shown in FIG. 6, adjustment may be performed to not perform step 601. Whether the user turns on, on the mobile phone, the switch entering the 3D mode is detected, and if the user turns on, on the mobile phone, the switch entering the 3D mode, steps 602 to 604 are performed. Adjustment is performed in step 605 to display the processed VR interface on the display screen of the mobile phone.

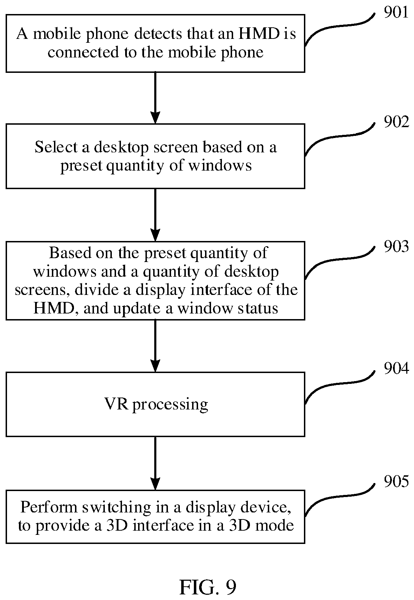

In the foregoing embodiment, after the 3D mode is entered, a plurality of application interfaces are displayed on a plurality of windows. Optionally, in the 3D mode, the plurality of windows may also display a multi-screen desktop. Specifically, at present, a mobile phone usually has a plurality of desktop screens, and a user may display different desktop screens through switching and flicking leftward and rightward. FIG. 9 shows a procedure of displaying a plurality of desktop screens according to Embodiment 2 of this application. Step 901 is similar to step 601. Details are not described herein again.

Step 902: Select a desktop screen based on a preset quantity of windows.

When the preset quantity of windows is 2, a primary screen and a neighboring desktop screen may be selected; or a current desktop screen and a neighboring desktop screen may be selected. When the preset quantity of windows is 3, three desktop screens including a primary screen may be selected; or three desktop screens including a current desktop screen may be selected. Step 903: Based on the preset quantity of windows and a quantity of desktop screens, divide a display interface of the HMD, and update a window state.

A home screen is set to a focus (Topmost) window state, and another selected desktop screen is marked as a visible state.

For example, when the preset quantity of windows is 2, and there is no desktop screen other than the home screen, the home screen is maximally displayed on the HMD.

When the preset quantity of windows is 3, and two desktop screens are found, the display interface of the HMD is divided into two areas, and two desktop screens each occupy a half of the display interface of the HMD. For example, a home screen in the topmost state is set to be displayed in a left-side area, and the other desktop screen is set to be displayed in a-side right area.

When the preset quantity of windows is 3, and three desktop screens are found, the display interface is divided into three areas. For example, a home screen in the topmost state is set to be displayed in a middle area, and the other two desktop screens are respectively set to be displayed in areas on two sides of the middle area.

The foregoing home screen may be replaced with a current desktop screen.

904. Perform VR processing on all desktop screens marked as visible states.

A system public control carries, by default, two sets of static picture resources corresponding to layout file machines. One set of static picture resources is default 2D resources displayed on a mobile phone screen, and the other set of static picture resources is 3D resources (these 3D resources are drawn in advance by a UI designer by using drawing software, and a 3D effect may be displayed by using an optical device of the HMD). For specific switching, refer to Embodiment 1.

905. Perform switching in a display device to enter a 3D mode, to be specific, provide a 3D interface in the 3D mode.

FIG. 13a shows an example of displaying a plurality of desktop screens, and a home screen 1303 of a desktop is used as a focus screen and displayed in the center. Adjacent screens 1302 and 1303 are distributed on two sides.

Similar to Embodiment 1, optionally, after the mobile phone is connected to the HMD, the mobile phone may not immediately prepare to switch to the 3D mode. Optionally, after the mobile phone prepares to be in the 3D mode, the mobile phone does not immediately switch to the 3D mode. Optionally, the wearable device is an HMD without a display, the mobile phone is placed into the HMD, and the user views display content of the mobile phone by using an optical lens of the HMD. For details, refer to Embodiment 1.

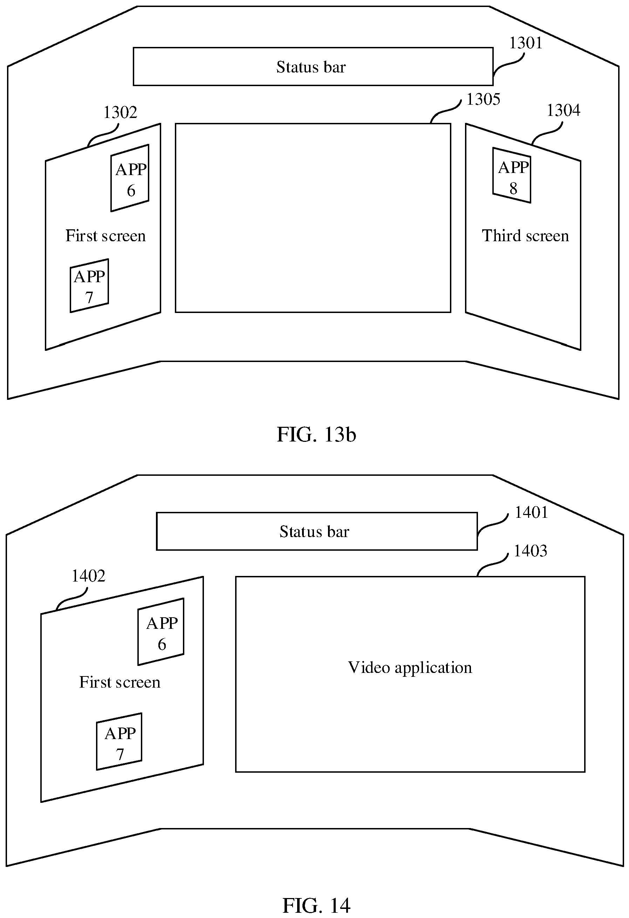

Optionally, in the foregoing two embodiments, both the application interface and the desktop screen may be displayed. Optionally, in Embodiment 1, if a quantity of all background applications is less than a quantity of applications that need to be searched for and that support screen splitting, the desktop screen and the background application may be selected for multi-window display. In Embodiment 2, if a quantity of desktop screens is less than a preset quantity of windows, a background application may be selected for multi-window display. Optionally, the preset quantity of windows is L, a quantity of application interfaces is N, and a quantity of desktop screens is M, where L = M + N, and L, M, and N are integers. FIG. 14 shows a first screen 1402 that is of a desktop screen and that is displayed on a left side of a display interface, and an interface 1403 that is of a video application and that is displayed on a right side of the display interface.

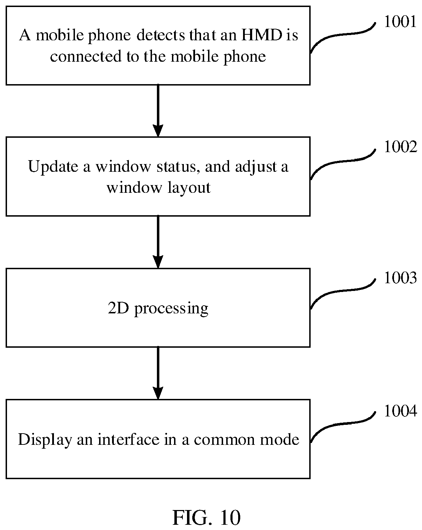

Referring to FIG. 10, Embodiment 3 of an interface display method in this embodiment of this application shows switching from a 3D mode to a common mode. The method includes the following steps.

1001. A mobile phone detects that an HMD is disconnected from the mobile phone.

For example, the mobile phone is connected to the HMD by using a USB, and the mobile phone detects that the HMD is disconnected from the USB of the mobile phone, or the mobile phone is connected to the HMD by using Bluetooth, and the mobile phone detects that the HMD is disconnected from Bluetooth of the mobile phone.

An underlying display management module deregisters a previously registered HMD, and sends VR_DISPLAY_DEVICE_DISCONNECTED broadcast (in a connected state, switching to a common mode is triggered in another manner, for example, a manner in which a switch in the 3D mode of the HMD device is turned off. In this case, other broadcast similar to VR_DISPLAY_DEVICE_OPEN or the like is correspondingly sent).

1002. The mobile phone updates a window status, and adjusts a display interface.

AMS: The AMS updates each application state and a background task list.

WMS: An application window in a topmost state is used as a focus window and continues to maintain a visible state, and another visible window is set to an invisible state.

For example, after the broadcast is received on a desktop screen, a home screen is set to a visible state, and another screen is set to an invisible state.

After the foregoing steps are completed, a VR_WINDOWS_UPDATE_FOR_2D_FINISHED message is sent to the WMS.

1003. Perform normalization processing on all windows that are of applications and that are marked as visible states.

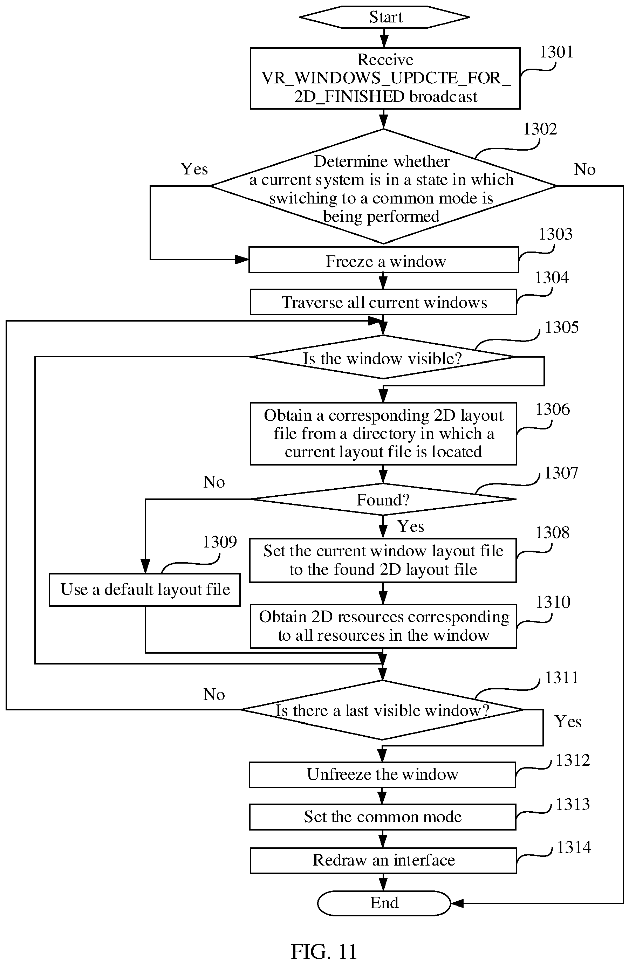

A system public control, a system preset application, and a third-party application supporting VR carry, by default, two sets of static picture resources corresponding to layout file machines. One set of static picture resources is default 2D resources displayed on a mobile phone screen, and the other set of static picture resources is 3D resources (these 3D resources are drawn in advance by a UI designer by using drawing software, and a 3D effect can be displayed by using an optical device of the HMD). As shown in FIG. 11, a specific 3D-to-2D switching procedure is as follows:
Step 1301: The WMS receives the VR_WINDOWS_UPDATE_FOR_2D_FINISHED message.
Step 1302: Determine whether a current system is in a state in which switching to a common mode is being performed; and if the current system is in the state, perform step 1303; or if the current system is not in the state, end the procedure.
Step 1303: Freeze a window, and prohibit a user from entering an event, in other words, in this case, skip processing an input event of the user, where the window is an interface of an application.
Step 1304: Start to traverse all applications.
Step 1305: Determine whether the window of the application is in a visible state; and if the window of the application is in the visible state, perform step 1306; or if the window of the application is not in the visible state, perform step 1311.
Step 1306: Search for a 2D layout file of the application.
Step 1307: Determine whether a 2D layout file of the application is found; and if the 2D layout file of the application is found, perform step 1307; or if the 2D layout file of the application is not found, perform step 1309, and use a default layout file.
Step 1308: Set a layout file of a window of the application to the found 2D layout file.
Step 1310: Obtain 2D resources corresponding to all elements in the window, in other words, obtain 2D resources corresponding to elements such as an icon, a text, and the like in the window.
Step 1311: Determine whether the application is a last application; if the application is the last application, perform step 1312; or if the application is not the last application, perform step 1304 to find a next application, and repeatedly perform steps 1304 to 1311.
Step 1312: Unfreeze the window to receive the input event of the user.
Step 1313: Set the common mode.
Step 1314: Draw a display interface.

In the foregoing process, if the applications traversed in step 1304 may be applications visible to windows, correspondingly, step 1305 is not performed.

1004. Display an interface in a common mode by using the mobile phone.

The mobile phone displays a processed common interface.

Optionally, in Embodiment 3, step 1001 may be replaced with as follows: detecting that the user turns on, on the mobile phone, a switch entering the common mode; or receiving a switch turn-off notification sent by the HMD, where a hardware switch is disposed on the HMD. When it is detected that the user turns off the hardware switch, the HMD notifies the mobile phone that the mobile phone continues to perform steps 1002 to 1005. Alternatively, it is determined whether the HMD is not worn. When detecting that the user takes off the HMD, the HMD notifies the mobile phone that the mobile phone continues to perform steps 1002 to 1005.

In the embodiment in FIG. 10, the wearable device is an HMD with a display. Optionally, the wearable device is an HMD without a display, the mobile phone is placed into the HMD, and the user views display content of the mobile phone by using an optical lens of the HMD. In this case, if there is no communication connection between the HMD and the mobile phone, in the embodiment shown in FIG. 10, adjustment may be performed to not perform step 1001. Whether the user turns on, on the mobile phone, the switch entering the common mode; and if the user turns on, on the mobile phone, the switch entering the common mode, steps 1002 to 1004 are performed.

FIG.12 shows an example 1 of a display interface in a 3D mode according to an embodiment of this application. An NBA game live broadcast picture that is live broadcast by a video application 1203 may be displayed in a middlemost position of a user's line of sight. A WeChat chat software interface 1202 is displayed on a left side, a news reference interface 1204 is displayed on a right side or another live picture is displayed on a right side, in this way, the user may view WeChat friend information while watching a sports game live broadcast, the user may further view related news of the sports game without closing other windows, and may input words at any time without affecting the displaying of other windows. Optionally, above the display interface in the 3D mode, a status bar 1201, status bar may be further used to display an HMD status or a status of the mobile phone, such as a remaining battery level, a signal, and the like. Optionally, the display area of the status bar may further display a notification message, such as a newly received SMS message.

When the user closes a window, another window properly adjusts attributes such as a location and a size based on a preset rule, and a background application may automatically change to foreground display. For example, after it is detected that the user closes the video application, the news application moves to a location of the video application, and is adjusted to a size of an original video application. The original location of the news application displays the background application. For a process of selecting a background application, refer to step 602. Specifically, only one background application may be selected. Optionally, whether a current foreground application supports screen splitting does not need to be executed. Refer to step 603 for the process of adjusting the properties such as position and size of other windows and windows newly switched from the background to the foreground application.

When it is detected that the user drags an application, another window properly adjusts attributes such as a location and a size based on a preset rule. For example, it is detected that the user drags the video application to the right, and when the overlapping part between the video application and the news application exceeds the preset threshold, the location of the video application and the news application are exchanged, and the size is also changed correspondingly.

When it is detected that the user gives an instruction of flicking rightward, the WeChat application 1202 and the video application 1203 move rightward, and the WeChat application 1202 is displayed as the focus window state, the video application 1203 is displayed at a location of the news application 1024, and the news application 1204 is adjusted to an invisible window, in addition, an application is selected from the background applications and displayed in a previous location of the WeChat application 1020.

When it is detected that the user opens a new application from an application, for example, opens a news link in WeChat and starts a Toutiao application, after the Toutiao application is started, the Toutiao application is displayed in the middle by default, and a WeChat window is still in a visible state and does not fall back to the background completely, only the position and size of the WeChat window is changed properly and automatically.

When the visible window reaches the default upper limit of the system, the earliest time in the visible window is changed to an invisible state, that is, it returns to the background automatically. After detecting the closing or pressing the back key to exit the application, the current visible window can be adaptively adjusted in position and size to adjust a background application to the visible state. If there is no other background application, the desktop screen will be displayed.

FIG.13a shows an example 2 of a display interface in a 3D mode according to an embodiment of this application. A home screen 1303 of a desktop is displayed as a focus screen in the center; the adjacent screens 1302 and 1303 are distributed on both sides. Optionally, the screen displayed in the common mode may be used as a focus screen for center display, and adjacent screens are distributed on both sides. Optionally, on the top of the display interface in the 3D mode, a status bar 1301, status bar may be further displayed to display a status of HMD or a status of the mobile phone.

Optionally, an application icon on each desktop screen is displayed prominently according to a usage frequency of recently clicking by the user. For example, a higher usage frequency of an application corresponding to the application icon indicates a more stereoscopically prominent icon, or a larger icon indicates a greater icon. Persons skilled in the art may figure out that another prominent display manner may be applied. In FIG.13a, an icon of an application APP 1 is highlighted on a home screen 1303, and icons of applications APP 2, APP 3, APP 4, and APP 5 are displayed in a common manner.

When it is detected that the user chooses to open an application, an interface of the opened application may be displayed as a focus window. Alternatively, a desktop screen on which the application icon is located is replaced or an interface of the opened application is displayed as a focus window, the home screen is moved to a right side for display, and the third screen is switched to an invisible state. As shown in FIG.13b, the user chooses to open an application APP 1, and an interface 1305 of the application APP 1 is displayed as a focus window, replacing a home screen interface.

FIG. 14 shows an example 3 of a display interface in a 3D mode according to an embodiment of this application. A first screen 1402 of a desktop screen may be displayed on a left side of a display interface, and an interface 1403 of a video application may be displayed on a right side. In this way, a user can select an application on a desktop while watching a video. Optionally, above the display interface in the 3D mode, a status bar 1401, status bar may be further displayed to display an HMD status or a status of the mobile phone, such as a remaining battery level or a signal. Optionally, the display area of the status bar may further display a notification message, such as a newly received SMS message.

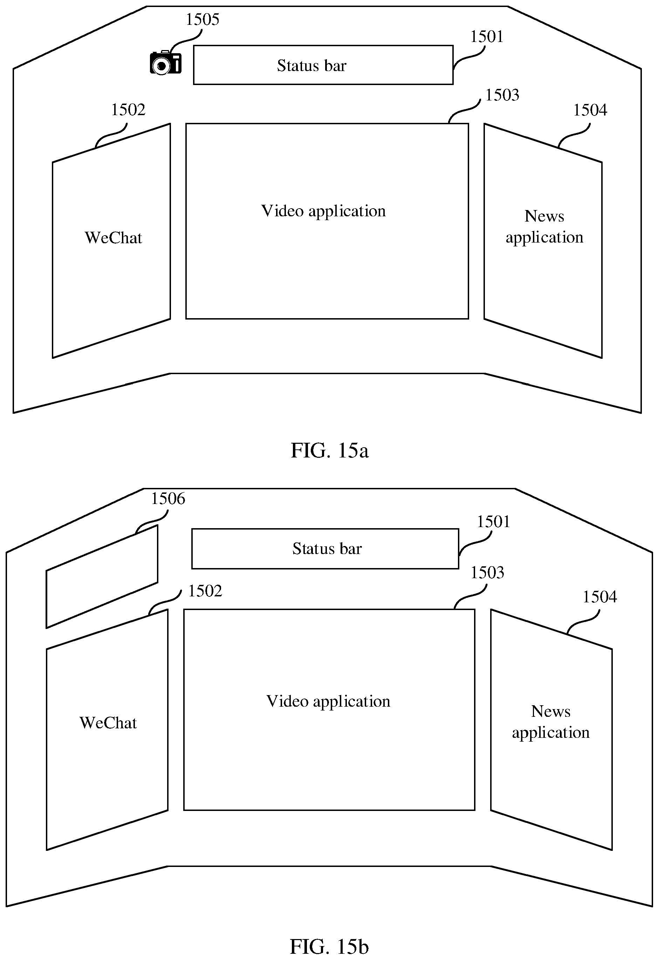

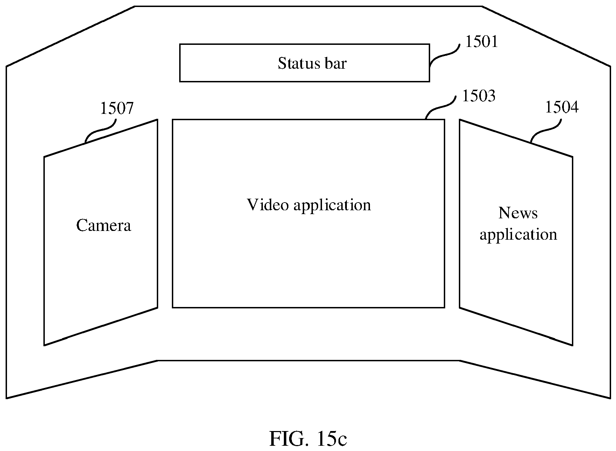

FIG. 15a shows a display interface example 4 in the 3D mode according to the embodiment of this application. A video application interface 1503 is displayed at the middlemost position of the user's line of sight, a WeChat chat software interface 1502 is displayed on the left, and a news quote interface 1504 is displayed on the right. The status bar area 1501 is displayed on the top side of the display interface, and an icon 1505 is provided in parallel with the status bar 1501. When the user selects the icon 1505, the HMD camera is turned on, as shown in Figure 15b, and a reality is provided in the blank area of the display interface. The environment view window 1506 displays the content collected by the camera. In this way, when the user wears the HMD, the user may quickly view the real environment, thereby avoiding a trouble that the HMD is frequently taken out and then worn with the HMD. Optionally, the window of view of a real environment may be displayed in a window of a plurality of windows. As shown in FIG. 15c, a 1507 window may display content collected by a camera, and an original WeChat interface 1502 is switched to invisible. Optionally, in the state in FIG. 15b, if an operation of the user for zooming in the window 1506 is detected, the display interface is switched to the state in FIG. 15c. Data collected by a camera of the HMD is first sent to the mobile phone through a connection with the mobile phone. When performing interface layout, the mobile phone processes the data collected by the camera of the HMD, and an interface sent to the HMD for display includes the data collected by the camera of the HMD. It may be understood that after receiving the data collected by the HMD camera, the mobile phone can perform necessary processing on the data, such as image blurring processing, facial treatment of people in the image, and the like.

In the foregoing embodiment, the detecting, by the mobile phone, various input operations of the user may be receiving, by the mobile phone, an instruction sent by the user through a remote control, or receiving, by the mobile phone, a touch instruction of the user on a touch device that comes with an HM. Alternatively, the mobile phone receives various implementations in which the mobile phone may obtain the instruction input by the user, such as a motion instruction that is of the user head and that is detected by the HMD by using the motion sensor.

The foregoing electronic device 102 in the foregoing embodiment may also be a device such as a tablet, a notebook computer or a projector that supports 3D display.

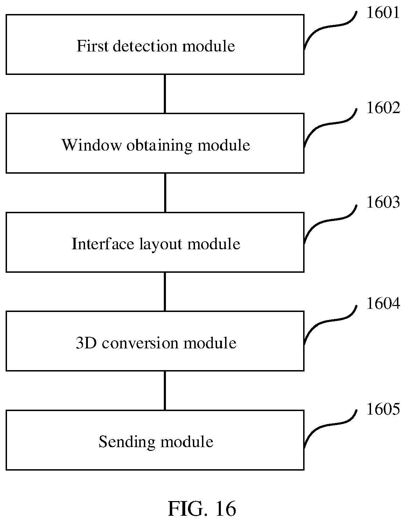

FIG.16 is a schematic structural diagram of an electronic device 101 according to an embodiment of this application. The electronic device 101 includes:
The first detection module 1601 is configured to detect that the second electronic device is connected to the electronic device. For specific implementation, refer to step 601. The window obtaining module 1602 is configured to obtain at least one window to be displayed based on a preset quantity of windows. The at least one window to be displayed is a two-dimensional window. For details, refer to step 602. The interface layout module 1603 is configured to divide the second window based on the preset quantity of windows and the at least one obtained to-be-displayed window. For the display interface of the electronic device, refer to step 603 specifically. The 3D conversion module 1604 is configured to perform dimension conversion processing on the at least one window to be displayed, refer to step 604, specifically. The sending module 1605 is configured to convert the at least one converted window. The window to be displayed is sent to the second electronic device, and the at least one converted to-be-displayed window is a three-dimensional window. For details, refer to step 605.

The electronic device further includes: a second detection module, configured to detect a switch in a 3D mode is turned on, to trigger the window obtaining module; or a third detection module, configured to receive a notification from the second electronic device, to trigger the window obtaining module, where the notification is used to indicate that the second electronic device is worn by a user.

The electronic device further includes: a fourth detection module, configured to detect a switch in a 3D mode is turned on, to trigger the sending module; or a fifth detection module, configured to receive a notification from the second electronic device, to trigger the sending module, where the notification is used to indicate that the second electronic device is worn by a user.

The at least one to-be-displayed window includes an application program interface and/or a desktop screen, and the application program interface includes an interface of a current foreground application and an interface of a background application of the first electronic device that are obtained when the first electronic device detects that the second electronic device is connected. The electronic device further includes a window status adjustment module, configured to: set the interface of the current foreground application to a focus window, and set the interface of the background application to a visible window.

The desktop screen includes icons of at least two applications, and the icons are highlighted based on the use frequencies of the applications.

The second electronic device includes a camera; the first electronic device further includes a receiving module, configured to receive the content collected by the camera; and the sending module is further configured to send the content collected by the camera in real time to the second electronic device, so that the second electronic device displays the content collected by the camera in real time.

The method disclosed in the embodiments of this application may be applied to a processor or may be implemented by a processor. The processor 930 may be an integrated circuit chip and has a signal processing capability. In an embodiment process, steps in the foregoing methods can be implemented by using a hardware integrated logical circuit in the processor, or by using instructions in a form of software. The foregoing processor may be a general purpose processor, a digital signal processor (DigitalSignalProcessing, DSP), an application-specific integrated circuit (ApplicationSpecificIntegratedCircuit, ASIC), a field-programmable gate array (Field-Programmable Gate Array, FPGA) or another programmable logic device, a discrete gate or a transistor logic device, or a discrete hardware component. The processor may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

It may be clearly understood by persons skilled in the art that for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual embodiment. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or a compact disc.

The foregoing embodiments are merely intended for describing the technical solutions of this application, but not for limiting this application. Although this application is described in detail with reference to the foregoing embodiments, persons skilled in the art should understand that they may still make modifications to the technical solutions described in the foregoing embodiments or make equivalent replacements to some technical features thereof, without departing from the spirit and scope of the technical solutions of the embodiments of this application.

## Claims

1. An interface display method, used by a first electronic device to display a three-dimensional 3D interface on a second electronic device, wherein the method comprises:
detecting, by the first electronic device, that the second electronic device is connected to the first electronic device;
obtaining, by the first electronic device, at least one to-be-displayed window based on a preset quantity of windows, wherein the at least one to-be-displayed window is a two-dimensional window;
dividing, by the first electronic device, a display interface of the second electronic device based on the preset quantity of windows and the at least one obtained to-be-displayed window;
performing, by the first electronic device, dimension conversion processing on the at least one to-be-displayed window; and
sending, by the first electronic device, at least one converted to-be-displayed window to the second electronic device, wherein the at least one converted to-be-displayed window is a three-dimensional window.

2. The method according to claim 1, wherein the performing dimension conversion processing on the at least one to-be-displayed window comprises:
performing binocular rendering on the at least one to-be-displayed window, to obtain a left-eye image and a right-eye image in the at least one to-be-displayed window.

3. The method according to claim 1 or 2, wherein after the detecting, by the first electronic device, that the second electronic device is connected to the first electronic device, before the obtaining, by the first electronic device, at least one to-be-displayed window based on a preset quantity of windows, the method further comprises:
detecting, by the first electronic device, that a switch in a 3D mode is turned on; or
receiving, by the first electronic device, a notification from the second electronic device, wherein the notification is used to indicate that the second electronic device is worn by a user.

4. The method according to claim 1 or 2, wherein after the performing, by the first electronic device, dimension conversion processing on the at least one to-be-displayed window, before the sending, by the first electronic device, at least one converted to-be-displayed window to the second electronic device, the method further comprises:
detecting, by the first electronic device, that a switch in a 3D mode is turned on; or
receiving, by the first electronic device, a notification from the second electronic device, wherein the notification is used to indicate that the second electronic device is worn by a user.

5. The method according to any one of claims 1 to 4, wherein the at least one to-be-displayed window comprises an application program interface and/or a desktop screen.

6. The method according to claim 5, wherein the application program interface comprises an interface of a current foreground application and an interface of a background application that are obtained when the first electronic device detects that the second electronic device is connected.

7. The method according to claim 6, further comprising: setting the interface of the current foreground application to a focus window, and setting the interface of the background application to a visible window.

8. The method according to claim 5, wherein the desktop screen comprises icons of at least two applications, and the icons are highlighted based on use frequencies of the applications.

9. The method according to any one of claims 1 to 8, wherein the second electronic device comprises a camera; the first electronic device receives content collected by the camera; and the first electronic device sends the content collected by the camera in real time to the second electronic device, so that the second electronic device displays the content collected by the camera in real time.

10. A first electronic device, configured to display a three-dimensional (3D) interface on a second electronic device, wherein the first electronic device comprises:
a first detection module, configured to detect that the second electronic device is connected to the electronic device;
a window obtaining module, configured to obtain at least one to-be-displayed window based on a preset quantity of windows, wherein the at least one to-be-displayed window is a two-dimensional window;
an interface layout module, configured to divide a display interface of the second electronic device based on the preset quantity of windows and the at least one obtained to-be-displayed window;
a 3D conversion module is configured to perform dimension conversion processing on the at least one to-be-displayed window; and
a sending module, configured to send at least one converted to-be-displayed window to the second electronic device, wherein the at least one converted to-be-displayed window is a three-dimensional window.

11. The electronic device according to claim 10, wherein the 3D conversion module is configured to perform binocular rendering on the at least one to-be-displayed window, to obtain a left-eye image and a right-eye image in the at least one to-be-displayed window.

12. The electronic device according to claim 10 or 11, further comprising:
a second detection module, configured to detect that a switch in a 3D mode is turned on, to trigger the window obtaining module; or
a third detection module is configured to receive a notification from the second electronic device, to trigger the window obtaining module, wherein the notification is used to indicate that the second electronic device is worn by a user.

13. The electronic device according to claim 10 or 11, further comprising:
a fourth detection module, configured to detect that a switch in a 3D mode is turned on, and trigger the sending module; or
a fifth detection module, configured to receive a notification from the second electronic device, to trigger the sending module, wherein the notification is used to indicate that the second electronic device is worn by a user.

14. The electronic device according to any one of claims 10 to 13, wherein the at least one to-be-displayed window comprises an application program interface and/or a desktop screen.

15. The electronic device according to claim 14, wherein the application program interface comprises an interface of a current foreground application and an interface of a background application of the first electronic device that are obtained when the first electronic device detects that the second electronic device is connected.

16. The electronic device according to claim 15, further comprising: a window status adjustment module, configured to: set the interface of the current foreground application to a focus window, and set the interface of the background application to a visible window.

17. The electronic device according to claim 15, wherein the desktop screen comprises icons of at least two applications, and the icons are highlighted based on use frequencies of the applications.

18. The electronic device according to any one of claims 10 to 17, wherein the second electronic device comprises a camera; the first electronic device further comprises a receiving module, configured to receive content collected by the camera; and the sending module is further configured to send the content collected by the camera in real time to the second electronic device, so that the second electronic device displays the content collected by the camera in real time.

19. An electronic device, configured to display a three-dimensional (3D) interface on a second electronic device, wherein
the electronic device comprises a peripheral interface, a processor, and a memory;
the memory is configured to store a program; and
the processor is configured to execute the program in the memory, so that the electronic device performs the method according to any one of claims 1 to 9.

20. A computer readable storage medium, comprising an instruction, wherein when the instruction is run on a computer, the computer is enabled to perform the method according to any one of claims 1 to 9.

21. A computer program product comprising an instruction, wherein when the computer program product is run on a computer, the computer is enabled to perform the method according to any one of claims 1 to 9.
